## Europäisches Patentamt
## European Patent Office
## Office européen des brevets

(11) Publication number: **0 167 529**
**B1**

# EUROPEAN PATENT SPECIFICATION

(45) Date of publication of patent specification: **08.02.89**

(51) Int. Cl.⁴: **B 23 K 35/02**

(21) Application number: **84900587.1**

(22) Date of filing: **27.12.83**

(86) International application number:
**PCT/US83/02061**

(87) International publication number:
**WO 85/02802 04.07.85 Gazette 85/15**

(54) RESILIENT RESISTANCE WELDING ELECTRODE.

(43) Date of publication of application:
**15.01.86 Bulletin 86/03**

(45) Publication of the grant of the patent:
**08.02.89 Bulletin 89/06**

(84) Designated Contracting States:
**DE FR GB**

(56) References cited:
**FR-A-2 006 751**
**US-A-2 471 478**
**US-A-2 892 922**
**US-A-3 235 704**
**US-A-4 025 750**

(73) Proprietor: **UNITED TECHNOLOGIES CORPORATION**
**United Technologies Building 1, Financial Plaza**
**Hartford, CT 06101 (US)**

(72) Inventor: **PADDOCK, Jordan, H.**
**38 Autumn Street**
**Agawam, MA 01001 (US)**

(74) Representative: **Schmitz, Jean-Marie et al**
**OFFICE DENNEMEYER S.à.r.l. P.O. Box 1502**
**L-1015 Luxembourg (LU)**

Courier Press, Leamington Spa, England.

## Description

The present invention concerns an electrode for resistance welding comprising a tang for attaching the electrode to a welding machine, a flexible hollow shell portion attached to the tang and extending transversely thereto, the hollow shell portion comprised of conductive sheet and an elastic means contained within the hollow shell portion for generally maintaining the shape of the shell portion when force is applied along the tang.

The FR-A-2006751 discloses an electrode for resistance welding comprising a tang and a flexible hollow shell portion attached to the tang and said shell portion is filled with a fluid.

The US-A-2892922 discloses an apparatus for resistance welding wherein are used resilient pads for pressing the electrodes against a honeycomb core.

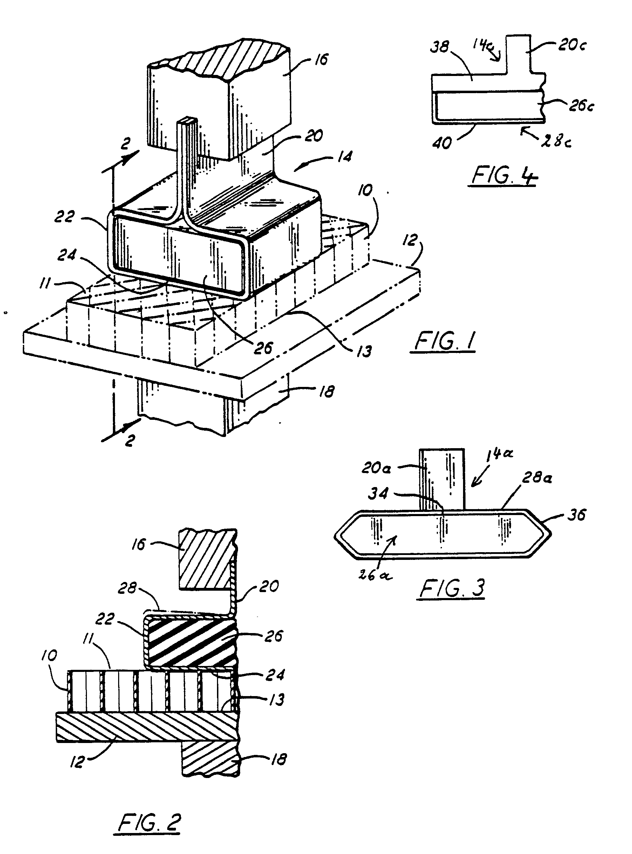

The present invention grew out of the need to resistance weld fine honeycomb structures to the surface of solid metal structures. Specifically, as shown in US-A-4218066 to Ackerman, honeycomb metal grids bonded to circumferential metal structures are useful as gas turbine engines for rotary seals. Brazing is a preferred way of making such structures, a fragment 10, 12 of which is illustrated in Figure 2 herein. To lessen fixturing requirements and to insure the proper placement of the honeycomb 10 with respect to the solid metal substructure 12, the honeycomb is first resistance tack welded to the solid substrate. After this is accomplished the welded structure is placed in a furnace and braze is caused to flow about the joint, including the resistance welded joint, to thus produce the final product. However, because of the relatively fragile structure of a typical honeycomb, where the cell wall thickness is of the order of 0.13-0.38 mm, the conventional procedures associated with capacitor discharge resistance welding processes have been unsuitable for forming the tack welds. Specifically, rigid electrodes, whether they be in the simple conventional form or wheels, provide highly concentrated loads and localized current flows which tend to both crush and overheat the honeycomb cell structure. Of course, the electrode pressure can be adjusted to a low level. But still, the alignment of the machine electrodes with respect to each other and the workpiece surface can result in non-uniform contact with the surface of the honeycomb, producing the aforementioned defects. This is the same sort of problem which also results when the surface of the honeycomb is either irregular or not exactly the same shape as the electrode which contacts it. Therefore, unless electrodes are changed and good alignment is attained, the aforementioned defects will result, especially when the cell material is of the order of 0.1 mm thick.

Others have addressed these types of problems previously. For example, Humphrey in US-A-2,266,424 shows a resistance spot welding electrode wherein a multiplicity of flexible electrode fingers are urged toward the workpiece by a rubber pad. Hardesty in US-A-2,892,922 discloses a method and apparatus for both resistance welding and forging honeycomb material. In the Hardesty patent, the honeycomb is resistance welded between two metal sheets, compared to the prime object of the present invention where only one sheet is attached to the honeycomb and where one end of the honeycomb must be maintained in the open condition. A resilien pad, or a gas bladder, is positioned to urge the multiplicity of movable electrodes towards the workpiece. In both the Hardesty and Humphrey patents the electrodes are rigid in one planar dimension and flexible in the opposing planar direction, with respect to the plane of the workpiece surface. In still another approach, layers of fine copper wire mesh have been laid across the end of a rigid electrode to provide a more compliant surface. But, while the prior methods will carry out the objects to which they are suited, they are not entirely useful for the purposes of the present invention in obtaining good joints without damage to the fine surface of a honeycomb.

An object of the invention is to provide an improved electrode for resistance welding. Particularly desired is one which applies an even force to fragile structures such as honeycomb and which is compliant to irregularities in the alignment of the workpiece surface with respect to the welding machine.

The electrode of the present invention is characterized in that said hollow shell portion is openended and said elastic means is an elastomeric material.

According to the invention, the electrode is generally T-shaped in cross section and is connected to the welding machine by the tang which constitutes the vertical of the tee. Extending transversely from the tang is a hollow shell portion made of thin sheet metal. Within the hollow is a material such as silicone rubber which generally maintains the shape of the electrode when the compliant shell is pressed against the workpiece.

The hollow shell portion of the electrode is preferably adapted to flex about the tang, thus enabling the electrode contact surface to comply readily a non-parallel workpiece surface. Preferably the electrode is made of 0.14-0.38 mm copper alloy which is folded so that the paired opposing ends of the sheet form the tang.

The electrode provides good contact with workpieces having surfaces which are uneven or variably inclined with respect to the normal plane of the welding machine. It has been found to be durable and able to facilitate the making of good honeycomb joints.

The foregoing and other objects, features and advantages of the present invention will become more apparent from the following description of preferred embodiments and accompanying drawings.

Figure 1 shows a resistance welding electrode comprising a hollow sheet metal portion with a contained rubber block, as it is used between the arms of a welding machine to join two workpieces.

Figure 2 is a partial vertical cross section through the apparatus of Figure 1.

Figure 3 shows an electrode having a rigid tang.

Figure 4 shows an electrode where the tang and upper part of the hollow shell portion are both rigid.

The present invention is described in terms of the welding of honeycomb material to the surface of a superalloy substrate, to make a structure like that shown in US-A-No. 2,814,717, the disclosure of which is hereby incorporated by reference. The honeycomb is made of the alloy Hastelloy X (by weight percent 22 Cr, 1.5 Co, 18.5 Fe, 9 Mo, 0.6 W, 0.1 C, balance Ni) sheet metal about 0.091-0.11 mm thick. The honeycomb cells are hexagonal in shape with a cross-dimension or width of about 1.65 mm, and a height of about 15 mm. The resistance weld is formed suitably by using a Benchmark Industries Inc. (Londonderry, N.H., USA) capacitor discharge resistance spot welder with a Model 3000 power supply and Model M head. The unit has an output capacity of up to 3000 watt seconds. The power setting is varied according to the weld joint area. It will be appreciated that the invention will be useful generally for resistance welding of structures and materials other than those specifically discusssed herein, and with other machines.

Figure 1 shows an electrode 14 in accord with the present invention as it is used to secure a piece of honeycomb 10 to a solid substrate 12, both shown in phantom, at a joint line 13. The electrode 14 is captured in the upper arm 16 of the resistance welding machine. A vertically downward force on the arm pushes the electrode 14 against the workpieces 10, 12 and thus clamps them against the bottom opposing arm 18 of the welding machine (which is not shown).

The electrode 14 is generally shaped like an inverted T. It is made of thin copper sheet, such as copper-1% chromium or cobalt-beryllium-copper (U.S. Resistance Welder Manufactuers Association Class 2 or 3 coppers), materials well-known for use in resistance welding electrodes. The foil is very thin, of the order of 0.135-0.38 mm thick to ensure that the electrode structure is sufficiently flexible. The electrode has a tang portion 20 which is held in the arm 16 and an attached lower shell portion 22, hollow in cross section and extending transversely from the tang. The lower surface 24 of the electrode 14 contacts the upper surface 11 of the honeycomb. Contained within the hollow cross section of the shell 22 is a resilient block 26 made of an elastomer such as General Electric RTV 630 silicone rubber having a Durometer hardness of about 50-60.

Figure 2 shows a vertical plane cross section of the apparatus illustrated in Figure 1 to enable an appreciation of the features of the electrode. The elastomer block 26 maintains the general shape of the electrode when the arms 16, 18 move towards each other and force the electrode 14 against the workpieces. If the upper surface 11 of the workpiece contacted by the electrode is uneven, then the lower sheet metal surface 24 of the electrode will tend to comply to the surface, and will be urged into contact with it by action of the rubber block 26. If the upper surface of the workpiece is not aligned with the electrode surface (i.e., if it is not generally perpendicular to the vertical motion plane of the arms), there will be an eccentric force on the shell 22 and it will flex about the tang 20, as illustrated by the phantom line 28.

In the drawing, the tang is shown in its simplest fashion, being comprised of the paired opposing ends of the sheet metal which forms the shell portion of the electrode. This is desirable because the tang 20 will be adapted to easy flexing to carry out the objects mentioned above. But an embodiment as shown in Figure 3 will also be within the scope of the invention. In Figure 3, the shell 28a is brazed at joint 34 to a solid tang 20a. The flexible construction of the shell and the elastomer 26a contained therein will still permit flexure motion about the vertical axis of the tang 20a. Figure 3 also illustrates how the shell shape can be varied to increase the compliance of the vertical sidewalls, specifically by angling the sidewalls 36. Of course, the electrode may have still other cross sections than those shown herein. Circular cross sections, and those which are non-regular will be within the scope of the invention.

While it is most desirable that the shell fully flex about the tang as described, a more basic usable mode of the invention is illustrated by Figure 5. The tang 20c has attached to it a transverely extending rigid member 38. The hollow shell 28c is comprised of the member 38 and attached sheet metal part 40. The resilient block 26c is contained within the hollow.

In a preferred use of the invention, the electrode will have a rectangular surface 24. Silicone rubber filled electrodes of 19 x 38mm and 32 x 64mm surface area and about 13mm interior height have been used, with applied forces of 20-135 kilograms between the arms. The nominal workpiece pressures produced by these electrodes range from 275-662 kPa. The electrodes have been found to be durable and when they do eventually erode, they are economical to replace.

In use, the electrode is pressed against the workpiece and held there while an electrical potential is applied to the arms of the welding machine. The electric current pulse flows through the conductive electrode to the joint, thus locally heating the workpieces at the joint 13 and forming the weld. The electrode is flexible yet the structure has sufficient structural integrity so that when the arms of the machine are separated the electrode maintains its shape and lifts readily off of the workpiece surface.

**Claims.**

1. An electrode (14; 14a; 14c) for resistance welding comprising a tang (20; 20a; 20c) for attaching the electrode (14; 14a; 14c) to a welding machine, a flexible hollow shell portion (22; 28a; 28c) attached to the tang (20; 20a; 20c) and extending transversely thereto, the hollow shell portion (22; 28a; 28c) comprised of a conductive sheet and an elastic means (26; 26a; 26c) contained within the hollow shell portion (22; 28a; 28c) for generally maintaining the shape of the shell portion (22; 28a; 28c) when force is applied along the tang (20; 20a; 20c) characterized in that said hollow shell portion is open-ended and said elastic means (26; 26a; 26c) is an elastomeric block.

2. The electrode of claim 1, characterized by a shell portion (22) which flexibly bends about the tang (20) when eccentric force is applied to the shell.

3. The electrode of claim 1 characterized by a shell portion (22; 28a; 28c) made of copper alloy sheet metal of 0.14-0,38 mm thickness.

4. The electrode of claim 3 characterized in that the tang (20) comprises the paired ends of the sheet metal which defines the shell portion (22).

5. The electrode of claim 1 characterized by an elastomer which is silicone rubber of about 50-60 Durometer.

## Patentansprüche

1. Elektrode (14; 14a; 14c) zum Widerstandsschweißen, mit einem Schaft (20; 20a; 20c) zum Befestigen der Elektrode (14; 14a; 14c) an einer Schweißmaschine und mit einem flexiblen, hohlen Mantelteil (22; 28a; 28c), der an dem Schaft (20; 20a; 20c) befestigt ist und sich quer zu demselben erstreckt, wobei der hohle Mantelteil (22; 28a; 28c) aus einem leitfähigen Flächenmaterial und aus einer elastischen Einrichtung (26; 26a; 26c) besteht, welch letztere in dem hohlen Mantelteil (22; 28a; 28c) enthalten ist, um die Form des Mantelteils (22; 28a; 28c) insgesamt aufrechtzuerhalten, wenn längs des Schafts (20; 20a; 20c) eine Kraft ausgeübt wird, dadurch gekennzeichnet, daß der hohle Mantelteil am Ende offen ist und daß die elastische Einrichtung (26; 26a; 26c) ein elastomerer Block ist.

2. Elektrode nach Anspruch 1, gekennzeichnet durch einen Mantelteil (22), der sich um den Schaft (20) flexibel biegt, wenn eine exzentrische Kraft auf den Mantel ausgeübt wird.

3. Elektrode nach Anspruch 1, gekennzeichnet durch einen Mantelteil (22; 28a; 28c) aus Kupferlegierungsblech mit einer Dicke von 0,14-0,38 mm.

4. Elektrode nach Anspruch 3, dadurch gekennzeichnet, daß der Schaft (20) die gepaarten Enden des Bleches aufweist, welches den Mantelteil (22) bildet.

5. Elektrode nach Anspruch gekennzeichnet durch ein Elastomer, welches Silikongummi mit einer Durometer-Härte von etwa 50-60 ist.

## Revendications

1. Electrode (14; 14a; 14c) pour soudage par résistance, cette électrode comprenant une queue (20; 20a; 20c) en vue de fixer cette électrode (14; 14a; 14c) à une machine de soudage, une partie formant une enveloppe creuse flexible (22; 28a; 28c) fixée à la queue (20; 20a; 20c) et s'étendant transversalement par rapport à celle-ci, cette partie formant une enveloppe creuse (22; 28a; 28c) étant constituée d'une tôle conductrice et d'un moyen élastique (26; 26a; 26c) contenue au sein de la partie formant une enveloppe creuse (22; 28a; 28c) en vue de maintenir généralement la configuration de la partie formant enveloppe (22; 28a; 28c) lorsqu'une force est appliquée le long de la queue (20; 20a; 20c), caractérisée en ce que cette partie formant une enveloppe creuse est à extrémités ouvertes, tandis que le moyen élastique (26; 26a; 26c) est un bloc élastomère.

2. Electrode selon la revendication 1, caractérisée en ce qu'elle comporte une partie formant enveloppe (22) qui est pliée de manière flexible autour de la queue (10) lorsqu'une force excentrique est appliquée à cette enveloppe.

3. Electrode selon la revendication 1, caractérisée en ce qu'elle comporte une partie formant enveloppe (22; 28a; 28c) réalisée en une tôle métallique à base d'alliage de cuivre d'une épaisseur de 0,14 à 0,38 mm.

4. Electrode selon la revendication 3, caractérisée en ce que la queue (20) est constituée des extrémités appariées de la tôle métallique qui définit la partie formant enveloppe (22).

5. Electrode selon la revendication 1, caractérisée en ce qu'elle comprend un élastomère qui est un caoutchouc de silicone d'une dureté d'environ 50-60 au Duromètre.

FIG. 4

FIG. 1

FIG. 3

FIG. 2